# EUROPEAN PATENT SPECIFICATION

(11) **EP 3 380 443 B1**
(45) Date of publication and mention of the grant of the patent: **02.09.2020**
(21) Application number: 16810137.6
(22) Date of filing: 16.11.2016
(51) Int. Cl.: C04B 28/14, C04B 40/00, C04B 20/10

(54) **CELLULOSE ETHER COMPOSITIONS WITH IMPROVED WORKABILITY FOR USE IN GYPSUM SMOOTHING MORTAR AND JOINT FILLER APPLICATIONS**
CELLULOSEETHERZUSAMMENSETZUNGEN MIT VERBESSERTER VERARBEITBARKEIT ZUR VERWENDUNG FÜR GIPSSPACHTELMÖRTEL- UND FUGENFÜLLERANWENDUNGEN
COMPOSITIONS D'ÉTHER DE CELLULOSE PRÉSENTANT UNE MEILLEURE APTITUDE AU FAÇONNAGE DESTINÉES À ÊTRE UTILISÉES DANS DES APPLICATIONS DE MORTIER DE LISSAGE À BASE GYPSE ET DE PRODUIT DE JOINTOIEMENT

(30) Priority: 25.11.2015 US 201562259781 P
(43) Date of publication of application: 03.10.2018
(73) Proprietor: Dow Global Technologies, LLC, Midland, MI 48674 (US)
(72) Inventor: NEUBAUER, Joerg, 29699 Bomlitz (DE); WAGNER, Anette, 29699 Bomlitz (DE); MENZ, Sonja, 29699 Bomlitz (DE)
(74) Representative: Beck Greener LLP
(86) International application number: PCT/US2016/062198
(87) International publication number: WO 2017/091403

(56) References cited:
- EP-A1- 0 775 678
- FR-A1- 2 873 046

## Description

The present invention relates to methods for making compositions for use as dry mix additives comprising kneading wet cellulose ether at an elevated temperature of from 50 to 120 °C, and a hydrophobic alkali swellable emulsion (HASE) polymer additive, as well as dry mixes containing the compositions made by the methods of the present invention.

Workability is very important performance criteria for gypsum smoothing mortars and joint filler compositions that are used, respectively, to finish gypsum or plaster surfaces and sheet rock or gypsum board joints and surface irregularities. Lump formation in these compositions when combined with water or moisture is caused by the given very fine gypsum particle size (less than 315 µm (not greater than 1 wt.%. retained on a 200 µm sieve (DIN EN 13963 (2011-11)); and the avoidance of lump formation is the major point in the context of workability.

To improve workability of gypsum smoothing mortar and joint filler, known approaches include blending dry cellulose ether with polyacrylamide. However, including polyacrylamide with a cellulose ether in a gypsum dry mix for smoothing mortars requires physical blending with cellulose ether. Blending both substances in powder form is time consuming and requires costly equipment for the control necessary to form useful additive compositions without dosage errors that result in performance issues. Further, in view of the inconsistency naturally inherent in gypsum, the workability of such gypsum smoothing mortar and tape joint dry mix and liquid compositions in use still needs improvement.

U.S. Patent no. 7,425,589B2, to Girg et al. discloses intensively mixing cellulose ether at a moisture content of from 5 to 90% and a suspension or solution of polymer, such as a polyacrylamide, at a and at a temperature of from 20 to 100 °C, and drying the product at a temperature of from 60 to 160 °C. The process avoids blending two powders. However, the resulting compositions fail to provide a lower level of lump formation in any gypsum plaster composition than such a composition having just a cellulose ether additive; the workability and undesirable lump formation of gypsum plasters with a polymer additive was worse than that of such plasters with just a cellulose ether.

The present invention seeks to solve the problems of providing cellulose ether additive compositions that give gypsum smoothing mortar and tape joint compounds improved workability.

### STATEMENT OF THE INVENTION

In a first aspect, the invention provides a method for making compositions for use as gypsum dry mix or liquid tape joint compound additives comprising kneading at an elevated temperature of from 50 to 120 °C or, preferably, from 60 to 90 °C, a wet cellulose ether mixture containing from 60 to 80 wt.% of water, based on the total weight of the mixture, one or more cellulose ether, preferably, the cellulose ether being a hydroxyethyl methyl cellulose or methyl cellulose, and from 0.5 to 25 wt.%, or, preferably, from 1.25 to 20 wt.% or, more preferably, from 2.5 to 20 wt.%, as solids, based on the total weight of cellulose ether solids, of a hydrophobic alkali swellable emulsion (HASE) polymer additive to form an additive, wherein the cellulose ether becomes coated with the HASE polymer; and, drying and grinding the additive to an average particle size of at least 50 wt.% < 200 µm (measured by light scattering).

The kneading device may comprise an extruder, such as a single-screw extruder or a multi-screw extruder; a kneader; a banbury mixer; a high shear mixer, such as a continuous inline mixer, for example, an IKA high-shear mixer, Oakes rotor stator mixer, Ross mixer, Silverson mixer, a continuous high shear mixer; or a homogenizer.

The hydrophobic alkali swellable emulsion polymer may comprise, in copolymerized form, (i) from 45 to 55 wt.% or, preferably, from 47 to 53 wt.% of at least one C₁ to C₄ alkyl (meth)acrylate, (ii) from 35 to 45 wt.%, or, preferably, from 37.5 to 42 wt.% of at least one ethylenically unsaturated carboxylic acid or salt thereof, preferably, acrylic acid, methacrylic acid or, preferably, not a salt, and (iii) from 2.5 to 20 wt.%, or, preferably, from 5 to 15.5 wt.% of a surfactant monomer that contains a hydrophobic group, such as a C₁₂ to C₂₄ alkyl group or a C₁₂ to C₂₄ alkylaryl group, a nonionic hydrophilic group, such as a poly(oxyalkylene) group having from 2 to 50, or, preferably, from 6 to 25 C₂ to C₄ oxyalkylene repeating units, preferably, oxyethylene repeating units, all weights based on the total weight of monomers used to make hydrophobic alkali swellable emulsion polymer.

The hydrophobic alkali swellable emulsion polymer may comprise, in copolymerized form (i) ethyl acrylate (EA), (ii) methacrylic acid (MAA) or a salt thereof, and (iii) a surfactant monomer that contains as the hydrophobic group a C₁₂ to C₁₈ alkyl group, or, preferably, a C₁₆ to C₁₈ alkyl group and as the nonionic hydrophilic group a poly(oxyethylene) group having 6 to 25 oxyethylene repeating units, such as an oleyl poly(oxyethylen)yl (meth)acrylate, or a stearyl poly(oxyethylen)yl (meth)acrylate, or mixtures thereof.

Preferably, the hydrophobic alkali swellable emulsion polymer is not crosslinked or comprises, in copolymerized form no multi-ethylenically unsaturated monomer.

Preferably, the hydrophobic alkali swellable emulsion polymer is not crosslinked and has a weight average molecular weight of from 250,000 to 1,000,000 or, preferably, from 400,000 to 800,000.

Preferably, either (a) the additive that is subject to drying and grinding or (b) the dried and ground additive includes an inorganic basic filler that readily disperses into water (with or without stirring), such as lime, in a sufficient amount, for example, from 0.25 to 50 wt.% or, preferably, from 1 to 20 wt.%, as solids, based on the solids weight of the additive, so that the additive provides when mixed with water an aqueous composition having a pH of from 8 to 13, or, preferably, from 9 to 11.5.

In another aspect, the invention provides a dry mix composition comprising gypsum or calcium sulfate and a dry mix additive comprising one or more cellulose ether powders wherein the cellulose ether powder contains on its surface from 2.5 to 20 wt.%, as solids, based on the total weight of cellulose ether solids, of a hydrophobic alkali swellable emulsion polymer.

In the dry mix of the invention, the hydrophobic alkali swellable emulsion polymer may comprise, in copolymerized form, (i) from 45 to 55 wt.% or, preferably, from 47 to 53 wt.% of at least one C₁ to C₄ alkyl (meth)acrylate, (ii) from 35 to 45 wt.%, or, preferably, from 37.5 to 42 wt.% of at least one ethylenically unsaturated carboxylic acid or a salt thereof, preferably, acrylic acid, methacrylic acid, or, preferably, not a salt thereof, and (iii) from 2.5 to 20 wt.%, or, preferably, from 5 to 15.5 wt.% of a surfactant monomer that contains a hydrophobic group, such as a C₁₂ to C₂₄ alkyl group or a C₁₂ to C₂₄ alkylaryl group, a nonionic hydrophilic group, such as a poly(oxyalkylene) group having from 2 to 50, or, preferably, from 6 to 25 C₂ to C₄ oxyalkylene repeating units, preferably, oxyethylene repeating units, all weights based on the total weight of monomers used to make hydrophobic alkali swellable emulsion polymer.

Alternatively, the hydrophobic alkali swellable emulsion polymer may comprise, in copolymerized form (i) ethyl acrylate (EA), (ii) methacrylic acid (MAA) or a salt thereof, and (iii) a surfactant monomer that contains a C₁₂ to C₁₈ alkyl group, or, preferably, a C₁₆ to C₁₈ alkyl group and a poly(oxyethylene) group having 6 to 25 oxyethylene repeating units, such as an oleyl poly(oxyethylen)yl (meth)acrylate, or a stearyl poly(oxyethylen)yl (meth)acrylate, or mixtures thereof.

Preferably, the hydrophobic alkali swellable emulsion polymer is not crosslinked or it comprises, in copolymerized form, no multi-ethylenically unsaturated monomer.

The dry mix composition may further comprise one or more inorganic filler, such as talc, or, preferably, an inorganic basic filler that readily disperses into water, such as calcium carbonate. The inorganic basic filler can be included, for example, in an amount, for example, from 0.25 to 50 wt.% or, preferably, from 1 to 20 wt.% as solids, based on the solids weight of the dry mix additive.

The dry mix composition may further comprise one or more polyacrylamide, preferably, a polyacrylamide having a weight average molecular weight of from 1 x10⁶ to 10 x 10⁶. The polyacrylamide has a particle size that is roughly equal the particle size of the dry mix composition, having an average particle size of at least 50 wt.% < 200 µm (measured by light scattering), or, preferably, at least 50 wt.% < 63 µm (measured by light scattering).

The dry mix composition may further comprise one or more water redispersible polymer powder of an emulsion polymer, such as an acrylic emulsion polymer or a vinyl ester emulsion polymer, such as ethylene-vinyl acetate, or combinations thereof.

The dry mix additive may be a powder having an average particle size of at least 50 wt.% < 200 µm (measured by light scattering), or, preferably, at least 50 wt.% < 63 µm (measured by light scattering).

Unless otherwise indicated, all temperature and pressure units are room temperature and standard pressure (STP).

All phrases comprising parentheses denote either or both of the included parenthetical matter and its absence. For example, the phrase "(meth)acrylate" includes, in the alternative, acrylate and methacrylate.

All ranges recited are inclusive and combinable. For example, a disclosure of from 50 to 120 °C or, preferably, from 60 to 90 °C will include all of from 50 to 120 °C, from 50 to 60 °C, from 60 to 120 °C, from 90 to 120 °C, from 50 to 90 °C or, preferably, from 60 to 90 °C.

By "aqueous" herein is meant that the continuous phase is water and from 0% to 10%, by weight based on the weight of the medium, of water-miscible compound(s). Preferred is water.

As used herein, the phrase "based on total solids" refers to weight amounts of any given ingredient in comparison to the total weight amount of all ingredients in the aqueous composition, including synthetic polymers, cellulose ethers, fillers, other inorganic materials, and other non-volatile additives. Water is not considered solids.

As used herein the term "DIN EN" refers to an English language version of a German materials specification, published by Beuth Verlag GmbH, Berlin, DE. As used herein, the term "DIN" refers to the German language version of the same materials specification.

By "dry mix" herein is meant a storage stable powder containing gypsum, cellulose ether, any hydrophobic alkali swellable emulsion polymer, any polymeric additive, and any fillers and dry additives. No water is present in a dry mix; hence it is storage stable.

As used herein, unless otherwise indicated, the term "weight average molecular weight" refers to such a molecular weight as determined by gel permeation chromatography (GPC) analysis using polyacrylic acid (pAA) standards for water soluble polymers and polystyrene standards for emulsion polymers.

Kneading a wet hydrophobic alkali swellable emulsion polymer at elevated temperature in combination with cellulose ethers dramatically improves the workability of a resulting gypsum containing product or mortar. Further, in the present invention, the methods lead to cellulose ether, e.g. HEMC, particles or domains coated with the hydrophobic alkali swellable emulsion polymer. The workability of the gypsum mortar in the present invention is not affected by HASE addition; thus, any lump formation issues otherwise generated by modifying agents such as polymeric colloidal stabilizers is avoided.

During kneading, the water content in the kneading device ranges from 60 to 80 weight % of the mixture being kneaded to keep up proper pressure to effect kneading and avoid damaging the kneader or its contents.

During kneading, the temperature of the contents in the kneader are kept elevated to enable improved mixing, and not exceed the gel point of the cellulose ether to avoid agglomeration. Because kneading is continued for a short time period, the kneader itself may be set at a temperature well above the gel point of the cellulose ether without the contents in the kneader exceeding the gel point of the cellulose ether during kneading.

Kneading may be continued for a time of from 10 to 120 minutes, or, preferably, from 20 to 60 minutes. Kneading may be carried out in one, two, or more than two stages.

Any cellulose ether that is soluble in water at 20 °C may be used in the present invention. In such compounds, the hydroxyl groups present in cellulose may be partially or fully replaced by -OR groups, wherein R is selected from a (C₁-C₆) alkyl group, a hydroxy(C₁-C₆)alkyl group and mixtures thereof. The presence of an alkyl substitution in cellulose ethers is conventionally described by the DS, i.e. the average number of substituted OH groups per anhydroglucose unit. For example, a methyl substitution is specified as DS (methyl) or DS (M). Similarly, the presence of a hydroxyalkyl substitution is conventionally described by the MS, i.e. the average number of moles of the esterification reagent which are bound in an ether-like manner per mole of anhydroglucose units. For example, the etherification with the ethylene oxide is stated as MS (hydroxyethyl) or MS (HE) and the etherification with propylene oxide as MS (hydroxypropyl) or MS (HP). The determination of the DS and MS is effected by the Zeisel method which is described, for example, in P.W. Morgan, Ind. Eng. Chem. Anal. Ed. 18 (1946) 500-504, and R.U. Lemieux, C.B. Purves, Can. J. Res. Sect. B 25 (1947) 485-489.

Suitable cellulose ethers for use in the methods of the present invention may include, for example, a hydroxyalkyl cellulose or an alkyl cellulose, or a mixture of such cellulose ethers. Examples of cellulose ether compounds suitable for use in the present invention include, for example, methylcellulose (MC), ethyl cellulose, propyl cellulose, butyl cellulose, hydroxyethyl methylcellulose (HEMC), hydroxypropyl methylcellulose (HPMC), hydroxyethyl cellulose ("HEC"), ethylhydroxyethylcellulose (EHEC), methylethylhydroxyethylcellulose (MEHEC), hydrophobically modified ethylhydroxyethylcelluloses (HMEHEC), hydrophobically modified hydroxyethylcelluloses (HMHEC), sulfoethyl methylhydroxyethylcelluloses (SEMHEC), sulfoethyl methylhydroxypropylcelluloses (SEMHPC), and sulfoethyl hydroxyethylcelluloses (SEHEC). Preferably, the cellulose ethers are binary mixed ethers, such as hydroxyethyl methylcellulose ("HEMC"), hydroxypropyl methylcellulose ("HPMC") and ethylhydroxyethyl cellulose.

The additive compositions of the present invention comprise up to 25 wt.%, as solids based on the total weight of cellulose ether solids, of total hydrophobic alkali swellable emulsion polymer. The hydrophobic alkali swellable emulsion polymer can be one or more suitable polymer. More than the inventive proportion of total hydrophobic alkali swellable emulsion polymer solids can lead to a loss in the water retention provided by the cellulose ether and cracking in the applied gypsum mortar.

Suitable hydrophobic alkali swellable emulsion polymers for use in the methods of the present invention may comprise addition polymers made from (i) 45 to 55 wt.% or, preferably, from 47 to 53 wt.% of at least one C₁ to C₄ alkyl (meth)acrylate, (ii) 35 to 45 wt.%, or, preferably, from 37.5 to 42 wt.% of at least one ethylenically unsaturated carboxylic acid, preferably, acrylic acid, methacrylic acid, or, preferably, not a salt thereof, and (iii) 2.5 to 20 wt.%, or, preferably, from 5 to 15.5 wt.% of a surfactant monomer that contains a hydrophobic group, such as a C₁₂ to C₂₄ alkyl group or a C₁₂ to C₂₄ alkylaryl group, a nonionic hydrophilic group, such as a poly(oxyalkylene) group having from 2 to 50, or, preferably, from 6 to 25 C₂ to C₄ oxyalkylene repeating units, preferably, oxyethylene repeating units, all weights based on the total weight of monomers used to make hydrophobic alkali swellable emulsion polymer.

Generally, the additive of the present invention and the dry mix of the present invention has a pH of 8 or higher, for example, from 9 to 11.5. This can be adjusted with an inorganic basic filler that readily disperses into water (either with or without stirring), such as an alkali metal carbonate, like lime hydrate, or hydroxide, like Ca(OH)₂. The higher pH improves the efficiency of the hydrophobic alkali swellable emulsion polymers. Water demand may need to be adjusted upward at a higher pH to maintain a workable mortar consistency (in a range of 700 to 1,200 Pa s via Brookfield viscosity at 5 rpm). The inorganic basic filler can be dry blended into the dry additive before or during the making of a dry mix in accordance with the present invention. Also, the inorganic basic filler can be dry ground in to the additive of the present invention.

Preferably, the hydrophobic alkali swellable emulsion polymers used in the present invention are not crosslinked. This allows for a more gradual thickening behavior and may improve workability.

Suitable C₁ to C₄ alkyl (meth)acrylates are chosen from methyl acrylate, ethyl acrylate, butyl (meth)acrylate and mixtures thereof with other C₁ to C₄ alkyl (meth)acrylates such as methyl methacrylate.

Suitable ethylenically unsaturated carboxylic acids may include such monomers having one carboxylic acid group or salts thereof, such as methacrylic acid or acrylic acid, or two carboxylic acid groups or salts thereof, such as itaconic acid, maleic acid, or a salt thereof, preferably, one carboxylic acid group.

Suitable surfactant monomers contains a C₁₂ to C₂₄ alkyl or alkylaryl group, and a nonionic poly(oxyethylene) group. Such a monomer may be an oleyl poly(oxyethylen)yl (meth)acrylate, or a stearyl poly(oxyethylen)yl (meth)acrylate, or mixtures thereof having from 2 to 50, or, preferably, from 6 to 25 oxyethylene repeating units, or mixtures thereof. For example, the surfactant monomer may be a C₁₆ to C₁₈ alkyl poly(oxyalkylene)(meth)acrylate, such as a C₁₆ to C₁₈ alkyl poly(oxyalkylene)₆ to ₂₅ methacrylate.

The hydrophobic alkali swellable emulsion polymer of the present invention may be made by conventional aqueous emulsion or suspension polymerization methods in the presence of an initiator, such as a peracid, e.g. a persulfate, or its salt, or a redox pair. Suitable polymerization methods are disclosed, for example, in European Patent application no. EP0013836A1, to Rohm and Haas. Preferably, the hydrophobic alkali swellable emulsion polymers are formed by gradual addition aqueous emulsion polymerization or, more preferably, polymerization of a shot of from 10 to 25 wt.% of the total monomers used to make the polymer, followed by gradual addition polymerization of the remainder of the monomers.

The dry mix compositions may further comprise polyacrylamides, or a combination of a polyacrylamide and a water redispersible polymer powder.

The polyacrylamide can be present in amounts of from 0.1 to 20 wt.% or, preferably, from 1 to 8 wt.%, as solids based on the total solids weight of the cellulose ether.

Suitable polyacrylamide polymers for use in the methods of the present invention may be polymers of an of acrylamide, methacrylamide, N-methylacrylamide, N,N-dimethylacrylamide. Preferred acrylamides have GPC (pAA) weight average molecular weights in the range of from 1 million to several millions.

Non-ionic polyacrylamides preferably have average molecular weights in the range of about 1 to 3 million; preferred cationically modified polyacrylamides have weight average molecular weights in the range of approximately 3 to 5 million, and preferred anionically modified polyacrylamides have average molecular weights ranging of from 1 to a few million.

In general, there are two types of tape joint compounds or gypsum mortars: 1) drying and 2) setting. Both generally comprise gypsum and further comprise one or more filler.

Drying compositions may be provided as ready-to-use dry mix compositions or as liquid tape joint compounds and calcium carbonate or limestone is the predominant inorganic filler. For storage, water can be mixed in with the inorganic filler and does not react with the inorganic filler. Upon application, the water evaporates to the atmosphere.

Setting compositions can be sold as a dry mix powder and water must not be added until used at the job site or else the dry mix blocks up in the package and becomes useless. The primary inorganic binder is calcium sulfate hemihydrate and the water does react with the binder, thus, the term setting. Preferably, the composition of the present invention is a drying composition and is a tape joint or gypsum smoothing compound (liquid) composition or a setting dry mix composition.

The dry mix and liquid compound compositions of the present invention comprise gypsum in an amount not less than 10 wt.%, preferably, 30 wt.% or more, or, more preferably, 40 wt.% or more, and even more preferably 50 wt.% or more, based on the total dry weight of the compositions.

The compositions of the present invention can include inorganic fillers. The level of inorganic filler ranges from 30 to 70 wt.%, preferably from 40 to 60 wt.%, based on the weight of the dry mix.

The predominant inorganic filler may be calcium carbonate, usually derived from limestone. Other inorganic fillers that can be used include), mica, clay, expanded perlite, and talc.

The dry mix or mortar may be substantially free from inorganic fillers or materials that react with other components of the composition such as water, in particular, calcium sulfate hemihydrate.

Other ingredients such as biocides, inorganic thickening agents and/or secondary water retention agents, anti-sag agents, air entraining agents, wetting agents, defoamers, dispersants, calcium complexing agents, retarders, accelerators, water repellents, water redispersible polymer powders, biopolymers, fibres and surfactants may be included in the compositions of the present invention. All of these other ingredients are known in the art and are available from commercial sources. Such additional additives may also be mixed with the gypsum-free mixture of the present invention.

The pH of any mortar is typically in the range of from 3 to 11, preferably, in the range of from 6 to 9. The viscosity of the aqueous tape joint compound or mortar is typically in the range of 400 to 800 Brabender units ("BU") at 25 °C.

The compositions of the present invention as dry mixes or wet compounds find use as gypsum smoothing mortars and are applied very thin for finishing for walls, wallboards or over plaster, for example, from 0.5 to 10 or less than 7 mm in thickness.

In addition, the compositions of the present invention find use as tape joint compounds and dry mix tape joint compounds, which are mixed with water at the time of use. These are generally applied by hand after mixing (if needed) over wall board with joint tape.

Regardless of the end use, the amount of water added to the dry mix to make a wet mortar or compound should be sufficient to enable one to apply the resulting wet composition to a substrate after mixing and letting stand for at least 3 to 10 minutes, as is conventional in the art.

Aqueous tape joint compounds are generally applied, for example, to a wall board panel with a broad knife or with a mechanical tool which simulates the action of a broad knife trowelling the tape joint compound. Drying is typically allowed to proceed under ambient conditions such as, for example, at from 10°C to 40°C.

### EXAMPLES: The following materials were used.

Setting gypsum dry powder (CASUTEC WS Casea GmbH, Ellrich, DE), containing no cellulose ether, pH ∼7.

The cellulose ether was a hydroxyethyl methylcellulose (HEMC) available as WALOCEL™ MKX 40000 PP 01 cellulose ether (Dow Deutschland Anlagengesellschaft mbH, DE). Viscosity given below.

The polyacrylamide 1 has 30 % of repeat units as anionic (carboxylic acid) groups and a viscosity at room temperature as a 1.0 wt.% solution in water at 10 rpm (Brookfield; Spindle 2) with 10 wt.% NaCl of from 1600-2200 mPa·s. Polyacrylamide 1 has an average particle size of <50 wt.% passing through a 63 micron sieve.

The hydrophobic alkali swellable emulsion polymer (HASE) was a copolymer of 50 wt.% ethyl acrylate (EA), 40 wt.% methacrylic acid (MAA) and 10 wt.% of C₁₆ to C₁₈ alkyl poly(oxyalkylene)₂₀(meth)acrylate having a weight average molecular weight (Mw) of 558,000. The aqueous emulsion copolymer had a 30 wt.% solids content and a viscosity (Brookfield LV, spindle 1 @ 60 rpm, 25°C) of 26 mPa s.

### Examples 1 to 3, 1C and 3C: Incorporation of Hydrophobic Alkali Swellable Emulsion Polymer onto a Cellulose Ether:

263.4 g Hydroxyethyl methylcellulose (HEMC, 5.1 wt.% moisture content) was placed into a kitchen mixing machine (Bosch ProfiMixx 44, Munich, Germany, 4-6 liter volume). In order to mimic the wet filter cake at the plant, water was added and adjusted to a total moisture content of 65%. Here the water content of the HASE suspension (30 % aq. solution) as well as the moisture content of the hydroxyethyl methylcellulose has been included. HASE suspension was added within 1 hour using a dropping funnel. During the addition the composition was mixed at a shear rate of from 35 to 45 rpm. Then the HASE - HEMC batch was removed from the kitchen mixing machine and placed into a heated laboratory scale (4-6 liter volume) kneading machine (Werner & Pfleiderer Masch.Typ: LUK 4 III-1, Coperion, Stuttgart, DE) set at 70 °C. The HASE - HEMC batch was then finally kneaded continually for 60 minutes at a shear rate of from 25 to 50 rpm; and the product afterwards dried in a drying cabinet at 55 °C and ground in an Alpine mill (Hosokawa Alpine Aktiengesellschaft, Augsburg, DE) equipped with an 0.5 mm sieve for a time sufficient that 100 wt.% of the product passes through the sieve to form a dry mix additive.
Then, the particle size was adjusted with a standard sieve so that the product has an average particle size of 40 - 60% <63 µm and >99.5% <200 µm.

As shown in Table 1, below, the grade of HEMC used and compared had consistent viscosities.

**Table 1: Wet Viscosity of Polymeric Fluidizer Cellulose Ether Mix**

| **Examples** | **1C¹** | **1** | **2** | **3** |
|---|---|---|---|---|
| HEMC or HEMC composition with HASE (mPa s*) | 46770 | 29120 | 37880 | 31020 |
| HASE (wt.% based on HEMC) | 0 | 15.0 | 5.0 | 10.0 |

| | | | | |
|---|---|---|---|---|
| * Viscosity: 2 wt.% aq. solution, Haake Rotovisko RV 100, shear rate 2.55 s⁻¹, 20°C; 1. Denotes Comparative Example. | | | | |

Not shown in Table 1, above, the polyacrylamide was included in the composition by adding it to the ground cellulose ether dry mix additive and dry mixing to make the final additive product. The dry polyacrylamide has an average particle size of < 50% through 63 µm and >98% through 315 µm.

Test Methods: 200g of drying gypsum smoothing mortar and joint filler raw material was dry blended with 1.0g of the dry mix additive and mixed in a plastic cup with tap water and, if included, the indicated amount of lime hydrate; the mortar was mixed after a waiting time of 15 sec for 45 sec with a wooden stick. The thickening behavior was evaluated immediately after stirring and expressed in narrative form, as shown in Tables 2A and 2B, below. The quality of thickening is indicated in narrative form: 1 is best (slow and gradual); 6 is worst (uneven and/or rapid), 2 is good. After a 10min. resting time, the mortar was stirred again and the workability was evaluated, as shown in Table 2A, below. Paste quality was evaluated visually for the formation of lumps. It is indicated whether or not lumps are present and if so to what degree: 1 is best; 6 is worst, 2 is good. Ease of movement and the stirring test refers to thickening power which is evaluated at the start and end of observed thickening and after stirring; this is judged in comparison to the comparative Example. Standing strength refers to anti sagging.

As shown in Table 2B, below, thickening behavior, standing strength, ease of movement and surface conditions were also evaluated in comparison to a control. In these tests, a number larger than 100 indicates better performance than the control, while a number smaller than 100 indicates lesser performance than the control.

Tables 2A and 2B, below, show workability results and performance for various inventive compositions and the control, Example 1C.

**Table 2A: Workability Results (at pH 11- adjusted using 2% lime hydrate)**

| **Materials:** | | | | **1C** | **1** | **1A** | **Dim** |
|---|---|---|---|---|---|---|---|
| | HEMC | | | 96 | | | Wt.% |
| | Polyacrylamide 1 | | | 4 | | 4 | Wt.% |
| | HEMC with HASE | | | | 100 | 96 | Wt.% |
| | water demand | | | 0.56 | 0.56 | 0.56 | |
| **Stirring test as described above** | | | | | | | |
| | | | **start of thickening** | 12 | 10 | 8 | sec |
| | | | **end of thickening** | 38 | 38 | 40 | sec |
| Thickening Behavior | | | | weaker thickening = grade 2 | noticeably less thickening = grade 1 | Strong thickening= grade 3 | % |
| **Lumps in gypsum mortar** | | | | none visible | none visible | none visible | |
| **Application Performance** | | | | | | | |
| | | **Ease of Movement¹** | | 3 | 3 | 3 | - |
| | | **Workability** (10min) | | normal, good sliding | normal, good sliding | normal, good sliding | |
| | | **Surface Rating¹** | | 4 | 3 | 3 | |
| | | **Surface Quality** | | standard/ some lumps | very good, no lumps | very good, no lumps on mix² | |

| | | | | | | | |
|---|---|---|---|---|---|---|---|
| 1. Grades for rating: 1 = best; 6 = worst; 2. One lump appeared after setting (∼24hrs). | | | | | | | |

As shown in Table 2A, above, the composition of Example 1, with no polyacrylamide showed better thickening behavior and much better lump control performance than the control in Comparative Example 1C. Further, the mortar in Example 1A with polyacrylamide behaved in the same manner as the inventive Example 1; and, the surface having applied on it mortars in Examples 1 and 1A had fewer lumps than the control in 1C.

**Table 2B: Workability Results (at neutral pH. no lime hydrate except in 3C)**

| **Materials:** | | | | **1C²** | **2** | **3** | **1** | **3C*** | **Dim** |
|---|---|---|---|---|---|---|---|---|---|
| | HEMC | | | 96 | | | | | Wt.% |
| | Polyacrylamide 1 | | | 4 | 4 | 4 | 4 | 4 | Wt.% |
| | HEMC with HASE | | | | 96 | 96 | 96 | 96 | Wt.% |
| | water demand | | | 0.50 | 0.50 | 0.50 | 0.50 | 0.50 | |
| **Stirring test** | | | | | | | | | |
| | | | **start of thickening** | 5 | 5 | 5 | 8 | nm³ | sec |
| | | | **end of thickening** | 35 | 23 | 20 | 30 | nm³ | sec |
| **Thickening Behavior** | | | | 100 | 90 | 90 | 90 | >120 | |
| **Application Performance** | | | | | | | | | |
| | | Ease of Movement (1 min) | | 100 | 90 | 100 | 95 | ∼80 | % |
| | | Ease of Movement (10 min) | | 100 | 90-95 | 95 | 95-100 | ∼80 | % |
| | | Standing Strength (1 min) | | 100 | 110 | 100 | 105-110 | ∼120 | |
| | | Standing Strength (10min) | | 100 | 105 | 105 | 105 | ∼120 | % |
| | | Surface Rating¹ | | 3 | 2 | 1 | 2 | nm³ | |
| | | Surface Quality | | Some lumps | Only few lumps | No lumps | Few lumps | Impossible to apply | |

| | | | | | | | | | |
|---|---|---|---|---|---|---|---|---|---|
| 1. Grades for rating: 1 = best; 6 = worst; 2. nm= Not possible to measure; 2. Denotes comparative Example; 3. nm= Not measurable. * Contains 2 wt.% lime, based on the total weight of cellulose ether and HASE. | | | | | | | | | |

As shown in Table 2B, above, under more challenging neutral pH conditions, the composition of Examples 1, 2 and 3 provided a surface with fewer lumps than comparative 1C. The composition of Examples 1, 2 and 3 also provided gentler thickening and greater ease of movement than did the comparative Examples of 1C and 3C. Thickening of the composition with 2 wt.% lime in Example 3C drastically increased as pH increased as the HASE additive became overly viscous with water demand set at 0.50; thus, the mortar made with the additive of 3C, which is the same as the additive in Example 1A with a lower water demand, could not even be applied to a substrate. Example 3C demonstrates the important of adding sufficient water to more basic (higher pH) versions of the dry mix compositions of the present invention. Further, the compositions in Example 2 containing 10 wt.% of the HASE on the basis of cellulose ether provided the best lump free applied gypsum mortar.

## Claims

1. A method for making compositions for use as gypsum dry mix or gypsum tape joint compound additives comprising kneading at elevated temperature of from 50 to 120 °C a wet cellulose ether mixture containing from 60 to 80 wt.% of water, one or more cellulose ether, and from 0.5 to 25 wt.%, as solids, based on the total weight of cellulose ether solids, of a hydrophobic alkali swellable emulsion (HASE) polymer additive to form an additive, wherein the cellulose ether becomes coated with the HASE polymer; drying and grinding the additive to an average particle size of at least 50 wt.% < 200 µm (measured by light scattering).

2. The method as claimed in claim 1, wherein the kneading device comprises an extruder, a kneader, a banbury mixer; a high shear mixer, or a homogenizer.

3. The method as claimed in claim 1, wherein the cellulose ether is hydroxyethyl methyl cellulose.

4. The method as claimed in claim 1, wherein the amount of the hydrophobic alkali swellable emulsion polymer ranges from 2.5 to 20 wt.%, as solids, based on the total weight of cellulose ether solids.

5. The method as claimed in claim 1, wherein the hydrophobic alkali swellable emulsion polymer comprises, in copolymerized form, (i) from 45 to 55 wt.% of at least one C₁ to C₄ alkyl (meth)acrylate, (ii) from 35 to 45 wt.% of at least one ethylenically unsaturated carboxylic acid or salt thereof, and (iii) from 2.5 to 20 wt.%, of a surfactant monomer that contains a hydrophobic group, a nonionic hydrophilic group, all weights based on the total weight of monomers used to make hydrophobic alkali swellable emulsion polymer.

6. The method as claimed in claim 5, wherein the hydrophobic alkali swellable emulsion polymer comprises, in copolymerized form (i) ethyl acrylate (EA), (ii) methacrylic acid (MAA), and (iii) a surfactant monomer that contains as a hydrophobic group a C₁₂ to C₁₈ alkyl group and as a nonionic hydrophilic group a poly(oxyethylene) group having 6 to 25 oxyethylene repeating units.

7. The method as claimed in claim 6, wherein the hydrophobic alkali swellable emulsion polymer is not crosslinked or comprises, in copolymerized form, no multi-ethylenically unsaturated monomer.

8. A dry mix composition comprising gypsum or calcium sulfate and a dry mix additive comprising one or more cellulose ether powders wherein the powder of cellulose ethers contains on its surface from 2.5 to 20 wt.%, as solids, based on the total weight of cellulose ether solids, of a hydrophobic alkali swellable emulsion (HASE) polymer additive.

9. The dry mix additive as claimed in claim 8, further comprising a polyacrylamide in the amount of from 0.1 to 20 wt.%, based on total cellulose ether solids, an inorganic basic filler that readily disperses into water, or a combination thereof.

10. The dry mix additive as claimed in claim 8 wherein the hydrophobic alkali swellable emulsion polymer is not crosslinked and has a weight average molecular weight of from 250,000 to 1,000,000.

## Patentansprüche

1. Ein Verfahren zum Herstellen von Zusammensetzungen zur Verwendung als Gipstrockenmischung- oder Gipsfugenbandverbundzusatzstoffe, beinhaltend Kneten einer nassen Celluloseethermischung, die zu 60 bis 80 Gew.-% Wasser, einen oder mehrere Celluloseether und als Feststoffe, bezogen auf das Gesamtgewicht an Celluloseetherfeststoffen, zu 0,5 bis 25 Gew.-% einen hydrophoben, alkaliquellbaren Emulsions(HASE)-Polymerzusatzstoff enthält, bei erhöhter Temperatur von 50 bis 120 °C, um einen Zusatzstoff zu bilden, wobei der Celluloseether mit dem HASE-Polymer beschichtet wird; Trocknen und Mahlen des Zusatzstoffs auf eine durchschnittliche Teilchengröße von mindestens 50 Gew.-% < 200 µm (gemessen durch Lichtstreuung).

2. Verfahren gemäß Anspruch 1, wobei die Knetvorrichtung einen Extruder, einen Kneter, einen Banburymischer, einen Hochschermischer oder einen Homogenisierer beinhaltet.

3. Verfahren gemäß Anspruch 1, wobei der Celluloseether Hydroxyethylmethylcellulose ist.

4. Verfahren gemäß Anspruch 1, wobei die Menge des hydrophoben, alkaliquellbaren Emulsionspolymers als Feststoffe, bezogen auf das Gesamtgewicht an Celluloseetherfeststoffen, von 2,5 bis 20 Gew.-% reicht.

5. Verfahren gemäß Anspruch 1, wobei das hydrophobe, alkaliquellbare Emulsionspolymer in copolymerisierter Form (i) zu 45 bis 55 Gew.-% mindestens ein C₁- bis C₄-Alkyl(meth)acrylat, (ii) zu 35 bis 45 Gew.-% mindestens eine ethylenisch ungesättigte Carbonsäure oder ein Salz davon und (iii) zu 2,5 bis 20 Gew.-% ein Tensidmonomer, das eine hydrophobe Gruppe, eine nichtionische hydrophile Gruppe enthält, beinhaltet, wobei alle Gewichte bezogen sind auf das Gesamtgewicht an Monomeren, die zum Herstellen des hydrophoben, alkaliquellbaren Emulsionspolymers verwendet wurden.

6. Verfahren gemäß Anspruch 5, wobei das hydrophobe, alkaliquellbare Emulsionspolymer in copolymerisierter Form (i) Ethylacrylat (EA), (ii) Methacrylsäure (MAA) und (iii) ein Tensidmonomer, das als eine hydrophobe Gruppe eine C₁₂- bis C₁₈-Alkylgruppe und als eine nichtionische hydrophile Gruppe eine Poly(oxyethylen)gruppe mit 6 bis 25 Oxyethylen-Wiederholungseinheiten enthält, beinhaltet.

7. Verfahren gemäß Anspruch 6, wobei das hydrophobe, alkaliquellbare Emulsionspolymer nicht vernetzt ist oder in copolymerisierter Form kein multiethylenisch ungesättigtes Monomer beinhaltet.

8. Eine Trockenmischungzusammensetzung, beinhaltend Gips oder Calciumsulfat und einen Trockenmischungszusatzstoff, der ein oder mehrere Celluloseetherpulver beinhaltet, wobei das Pulver aus Celluloseethern auf seiner Oberfläche als Feststoffe, bezogen auf das Gesamtgewicht an Celluloseetherfeststoffen, zu 2,5 bis 20 Gew.-% einen hydrophoben, alkaliquellbaren Emulsions(HASE)-Polymerzusatzstoff enthält.

9. Trockenmischungszusatzstoff gemäß Anspruch 8, ferner beinhaltend, bezogen auf Gesamtcelluloseetherfeststoffe, ein Polyacrylamid in der Menge von 0,1 bis 20 Gew.-%, einen anorganischen basischen Füllstoff, der ohne Weiteres in Wasser dispergiert, oder eine Kombination davon.

10. Trockenmischungszusatzstoff gemäß Anspruch 8, wobei das hydrophobe, alkaliquellbare Emulsionspolymer nicht vernetzt ist und ein gewichtsgemitteltes Molekulargewicht von 250 000 bis 1 000 000 aufweist.

## Revendications

1. Un procédé pour la fabrication de compositions destinées à être utilisées en tant qu'additifs pour mélange sec de gypse ou de pâte pour joints à bande de gypse comprenant le pétrissage à une température élevée allant de 50 à 120 °C d'un mélange d'éther de cellulose mouillé contenant de 60 à 80 % en poids d'eau, d'un ou de plusieurs éthers de cellulose, et de 0,5 à 25 % en poids, en termes de solides, rapporté au poids total de solides d'éther de cellulose, d'un additif polymère en émulsion hydrophobe et gonflable en milieu alcalin (HASE) afin de former un additif, l'éther de cellulose se retrouvant revêtu du polymère HASE ; le séchage et le broyage de l'additif jusqu'à une taille moyenne des particules d'au moins 50 % en poids < à 200 µm (mesurée par diffusion de la lumière).

2. Le procédé tel que revendiqué dans la revendication 1, dans lequel le dispositif de pétrissage comprend une extrudeuse, un pétrin, un mélangeur Banbury, un mélangeur à haut cisaillement, ou un homogénéiseur.

3. Le procédé tel que revendiqué dans la revendication 1, dans lequel l'éther de cellulose est l'hydroxyéthylméthylcellulose.

4. Le procédé tel que revendiqué dans la revendication 1, dans lequel la quantité du polymère en émulsion hydrophobe et gonflable en milieu alcalin est comprise dans l'intervalle allant de 2,5 à 20 % en poids, en termes de solides, rapporté au poids total de solides d'éther de cellulose.

5. Le procédé tel que revendiqué dans la revendication 1, dans lequel le polymère en émulsion hydrophobe et gonflable en milieu alcalin comprend, sous forme copolymérisée, (i) de 45 à 55 % en poids d'au moins un (méth)acrylate d'alkyle en C₁ à C₄, (ii) de 35 à 45 % en poids d'au moins un acide carboxylique éthyléniquement insaturé ou d'un sel de celui-ci, et (iii) de 2,5 à 20 % en poids, d'un monomère tensioactif qui contient un groupe hydrophobe, un groupe hydrophile non ionique, tous les poids étant rapportés au poids total de monomères utilisés pour fabriquer un polymère en émulsion hydrophobe et gonflable en milieu alcalin.

6. Le procédé tel que revendiqué dans la revendication 5, dans lequel le polymère en émulsion hydrophobe et gonflable en milieu alcalin comprend, sous forme copolymérisée (i) de l'acrylate d'éthyle (EA), (ii) de l'acide méthacrylique (MAA), et (iii) un monomère tensioactif qui contient en tant que groupe hydrophobe un groupe alkyle en C₁₂ à C₁₈ et en tant que groupe hydrophile non ionique un groupe poly(oxyéthylène) ayant 6 à 25 unités de répétition d'oxyéthylène.

7. Le procédé tel que revendiqué dans la revendication 6, dans lequel le polymère en émulsion hydrophobe et gonflable en milieu alcalin n'est pas réticulé ou ne comprend pas, sous forme copolymérisée, de monomère multiéthyléniquement insaturé.

8. Une composition en mélange sec comprenant du gypse ou du sulfate de calcium et un additif pour mélange sec comprenant une ou plusieurs poudres d'éther de cellulose, la poudre d'éthers de cellulose contenant sur sa surface de 2,5 à 20 % en poids, en termes de solides, rapporté au poids total de solides d'éther de cellulose, d'un additif polymère en émulsion hydrophobe et gonflable en milieu alcalin (HASE).

9. L'additif pour mélange sec tel que revendiqué dans la revendication 8, comprenant en outre un polyacrylamide dans la quantité allant de 0,1 à 20 % en poids, rapporté aux solides d'éther de cellulose totaux, un matériau de remplissage basique inorganique qui se disperse facilement dans de l'eau, ou une combinaison de ceux-ci.

10. L'additif pour mélange sec tel que revendiqué dans la revendication 8 dans lequel le polymère en émulsion hydrophobe et gonflable en milieu alcalin n'est pas réticulé et a une masse moléculaire moyenne en poids allant de 250 000 à 1 000 000.
